# EUROPEAN PATENT APPLICATION

(11) **EP 4 600 656 A1**
(43) Date of publication of application: **13.08.2025**
(21) Application number: 24156042.4
(22) Date of filing: 06.02.2024
(51) Int. Cl.: G01N 35/00, G01N 35/02, G01N 35/04

(54) **AN ANALYTIC SAMPLE CUVETTE TIMER RACK AND A METHOD FOR RUNNING AN ANALYTIC SAMPLE CUVETTE TIMER RACK**

(71) Applicant: Hach Lange GmbH, 14163 Berlin (DE)
(72) Inventor: Golitz, Andreas, Berlin (DE); Jonak, Andreas, Berlin (DE); Kussmann, Michael, Berlin (DE)
(74) Representative: terpatent PartGmbB

(57) **Abstract**

The invention refers to an analytic sample cuvette timer rack (10) comprising:
several identical vertical sample cuvette parking receptacles (541-544) for vertically parking analytic sample cuvettes (20') being provided with a readable analysis type indicator (26) indicating an analysis type (ty),
whereas every sample cuvette parking receptacle (541-544) is provided with a signal means (551-554),
a single separate sample cuvette reader station (52) with an indicator reader (32) for reading the analysis type indicator (26) of an analytic sample cuvette (20),
an assigning means (46) for assigning the analytic sample cuvette (20) to a sample cuvette parking receptacle (541-544), and
an electronic time management (40) being informationally connected to the indicator reader (32), to the signal means (551-554) and to the assigning means (46),
whereas the electronic time management (40) is provided with an analysis type timing library (49) has memorized reaction times (Tr) for at least two different analysis types (ty),
and whereas the electronic time management (40) is provided with a timer coordination unit (48) which activates the signal means (551-554) of the assigned sample cuvette parking receptacle (541-544) when the reaction time (Tr) for the analysis type (ty) identified by the sample cuvette reader station (52) has elapsed.

## Description

The invention refers to an analytic sample cuvette timer rack for assisting the handling of analytic sample cuvettes, preferably for water analysis, and refers to a method for running the analytic sample cuvette timer rack.

The invention generally refers to a laboratory arrangement for manually analyzing an analyte, for example ammonium, phosphate or nitrate, by using a laboratory analyzer. Typically, a water sample is pipetted into an analytic sample cuvette which sample cuvette typically already comprises a suitable reagent, and then is parked in a sample cuvette rack until the analytic sample cuvette is ready to be analyzed in laboratory analyzer device. The user person manually determines the reaction time of the analysis type used, and typically controls the reaction time manually by means of a stopwatch etc. This approach can become cumbersome if several different analytes of different places, for example of different basins of a water treatment plant, are determined at the same time.

A highly sophisticated and relatively expensive modular cuvette rack system is known from DE 2021 126 081 A1.

It is an object of the invention to provide a simple means and method for supporting the handling of numerous analytic sample cuvettes.

This object is solved with an analytic sample cuvette timer rack with the features of apparatus claim 1 and with a method for running the analytic sample cuvette timer rack with the features of method claim 6.

The analytic sample cuvette timer rack is a laboratory device and can generally be an integral part of an analyzer, but preferably is not an integral part of an analyzer device where the concentration of the analyte is finally determined.

However, the analytic sample cuvette timer rack can be electrically and/or informationally connected to an analyzer device so that the analyzer device can plan the measurement sequence.

The analytic sample cuvette timer rack comprises several identical vertical sample cuvette parking receptacles for vertically parking analytic sample cuvettes being provided with a readable analysis type indicator. The parking receptacles can be vertical slots in a rack frame or in a rack housing. Preferably, many more than two identical parking receptacles are provided.

The analytic sample cuvettes generally are provided with a machine-readable analysis type indicator indicating the type of analyte which can be analyzed with that specific analytic sample cuvette. In most cases, the suitable reagent is already provided in the sample cuvette by the manufacturer. The analysis type indicator can be any technical type of indicator but is, preferably, an optical indicator realized as a one-dimensional or two-dimensional barcode provided at the outside surface of the sample cuvette.

Every sample cuvette parking receptacle is provided with a signal means which allows to provide at least one kind of signal. Preferably, the signal means is an optical signal means, and preferably can signalize two or even more different messages. Every signal means is clearly assigned to one particular parking receptacle. However, the signal means can be realized as a single monitor screen to unambiguously display a signal for a particular parking receptacle. Preferably, the signal means realized as individual signal elements physically assigned to the cuvette parking receptacles, are realized as optical signal means. More preferably, the signal means can indicate more than one information.

The analytic sample cuvette timer rack is provided with an assigning means for assigning the analytic sample cuvette to a particular sample cuvette parking receptacle. The assigning means can be of the passive type or of the active type. If the assigning means is of the active type, the assigning means signalizes to the user person which sample cuvette parking receptacle should be used for parking the sample cuvette. If the assigning means is of the passive type, the user person determines which free sample cuvette parking receptacle is used for parking the sample cuvette. However, the assigning means can be of any type which allows to determine and to memorize which sample cuvette is parked in which parking receptacle.

The analytic sample cuvette timer rack is provided with a single separate sample cuvette reader station with an indicator reader for reading the analysis type indicator of an analytic sample cuvette. Generally, the reader station can be any type of type of a reader station. However, the sample cuvette reader station is suitable to read the analysis type indicator of the sample cuvettes. In case of an optical analysis type indicator, the sample cuvette reader station is a one-dimensional or a two-dimensional camara for reading a corresponding barcode defining the analysis type indicator of the analytic sample cuvettes.

The analytic sample cuvette timer rack is provided with an electronic time management which is informationally connected to the indicator reader, to the signal means and to the assigning means. The electronic time management is provided with an analysis type timing library which has memorized reaction times for at least two different analysis types, namely for all analysis types which are available or which are used at that site.

The electronic time management is provided with a timer coordination unit which activates the signal means of the assigned sample cuvette parking receptacle when the reaction time for the analysis type being identified by the sample cuvette reader station has elapsed. The signal means indicates to the user person that the analytic sample cuvette is ready to be analyzed in a separate analyzer device, for example a photometer.

Additionally, the signal means controlled by the electronic time management can signalize also other information, for example to provide an intermediate process step, for example the addition of another reagent, or can signalize, that an acceptable maximum reaction time has been elapsed so that the analytic sample cuvette should be sorted out without being analyzed. The different information can be signalized, for example, by a visual indicator such as different light colours of the signal means and/or by blinking or flashing, and/or can be signalized alternatively or additionally by acoustic signals.

Since the handling of even numerous analytic sample cuvettes is assisted by the analytic sample cuvette timer rack, the precision and reliability of the cuvette analytic sample cuvette test method is generally improved.

Preferably, the analytic sample cuvette timer rack is provided with a cuvette temperature detector which is physically assigned to the sample cuvette reader station for detecting the cuvette temperature of the analytic sample cuvette. The temperature detector preferably is a contactless infrared temperature sensor, and even more preferably is directed to and detects the temperature of the bottom wall of the sample cuvette standing in the sample cuvette reader station. The analysis type timing library has memorized temperature-dependent reaction times.

The reaction time is generally dependent on the temperature of the solution comprising the reagent and the liquid sample. Typically, the liquid sample is taken from a basin of a water treatment plant so that the liquid sample can have a temperature in the range of 0°C to 35°C so that the reaction dynamics and the resulting suitable reaction time can also vary in a relatively wide range.

Since the cuvette temperature detector at least roughly determines the temperature of the liquid content of the cuvette, the timer coordination unit activates the signal means of the assigned sample cuvette parking receptacle when the reaction time the detected cuvette temperature for the detected analysis type and has elapsed.

The assigning means can be realized as an active assigning means, which assigning means instructs the user person to park the sample cuvette in a particular parking receptacle right after the reading of the analysis type indicator of the sample cuvette by the indicator reader. The instruction can be provided by the signal means.

Alternatively and preferably, every sample cuvette parking receptacle is provided with a sample cuvette presence sensor which is informationally connected to the assigning means, whereas the assigning of the sample cuvette parking receptacle is caused by the respective sample cuvette presence sensor. Right after the indicator reader has read-in the information of the analysis type indicator of an analytic sample cuvette, the user person parks the same sample cuvette into a free cuvette parking receptacle, which is detected by the corresponding sample cuvette presence sensor of that parking receptacle. This information is memorized by the electronic time management to allow the timer coordination unit to activate the signal means of the assigned correct parking receptacle.

Preferably, the analytic sample cuvette timer rack is additionally provided with an environmental temperature sensor for detecting the environmental temperature. The electronic time management adapts the reaction time based on the detected environmental temperature.

The temperature of the sample cuvette and of the liquid sample within the sample cuvette generally adapts to the environmental temperature. Typical reaction times range between a few minutes and more than 30 minutes. The temperature difference between the environmental temperature of the analytic sample cuvette timer rack and of the liquid sample when the sample cuvette is applied to the sample cuvette reader station can be up to 30 K. As a consequence, the temperature of the liquid sample in the sample cuvette can substantially change during the reaction interval which can relevantly influence the reaction dynamics and consequently influences the ideal reaction time.

Including the environmental temperature into the calculation of the reaction time therefore improves the quality of the results of the analyzing process.

Preferably, the sample cuvette reader station is provided with a sample cuvette reader receptacle which is provided with a motor-driven rotary receptacle base for rotating the analytic sample cuvette during the reading procedure. The analytic sample cuvettes can be provided with an optical analysis type indicator which is readable only at one side of the sample cuvette body. The rotatable receptacle base allows to rotate the sample cuvette for aligning the analysis type indicator of the sample cuvette with the indicator reader.

The method for running the analytic sample cuvette timer rack comprises the following method steps controlled by the electronic time management: identifying the analysis type of the analysis type indicator detected by the indicator reader,
reading out the reaction time for the identified analysis type from the analysis type timing library based on the identified analysis type ,
the assigning means assigning a free sample cuvette parking receptacle for an analytic sample cuvette, and
activating the electronic signal means of the assigned sample cuvette parking receptacle when the read-out reaction time has elapsed.

Preferably, the timer coordination unit reads-out the reaction time from the analysis type timing library based on the identified analysis type and additionally based on the corresponding cuvette temperature.

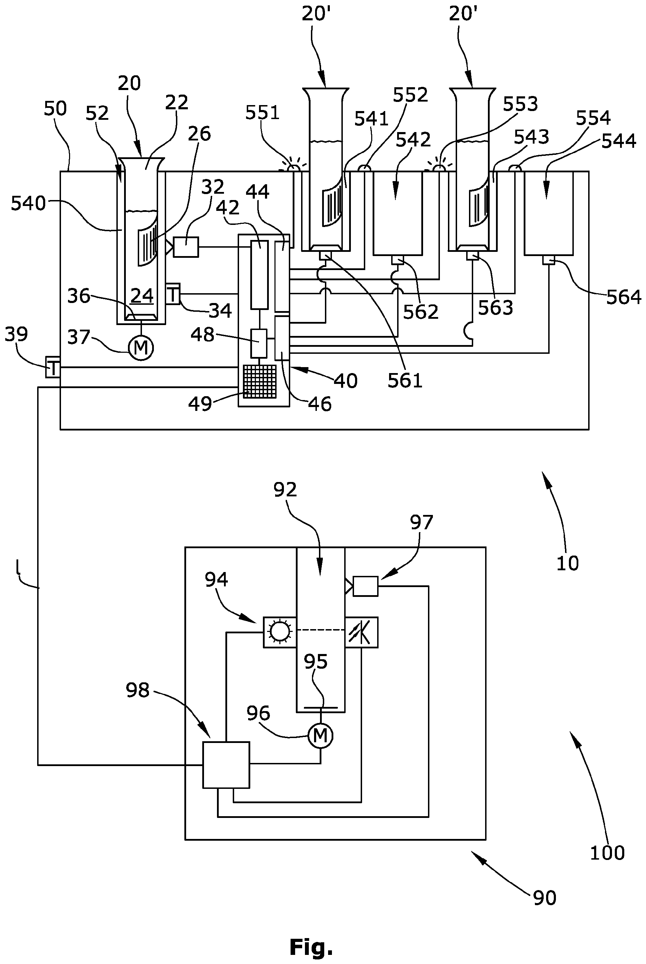

One embodiment of the invention is described with reference to the enclosed drawing. The figure schematically shows a laboratory analyzer arrangement comprising a laboratory analyzer unit and a separate analytic sample cuvette timer rack.

The figure schematically shows a laboratory analyzer arrangement 100 comprising a laboratory analyzer unit 90 and a separate analytic sample cuvette timer rack 10. The laboratory analyzer unit 90 and the analytic sample cuvette timer rack 10 can be connected by a connection line
I for providing electric energy from the laboratory analyzer unit 90 to the analytic sample cuvette timer rack 10 and/or for exchanging digital information and signals.

The analytic sample cuvette timer rack 10 comprises a rack frame 50 defining numerous cuvette parking receptacles 541-544 being vertical slots for vertically receiving analytic sample cuvettes 20'. Every cuvette parking receptacle 541-544 is provided with an individual sample cuvette presence sensor 561-564 which detect the absence or the presence of an analytic sample cuvette 20' in the respective cuvette parking receptacle 541-544. The sample cuvette presence sensors 561-564 in the present embodiment are provided at the bottom of every cuvette parking receptacle 541-544, respectively, and can be, for example, provided as an optical sensor or a capacitive sensor.

An individual signal means 551-554 is provided next to every cuvette parking receptacle 541-544, which signal means 551-554 is, in the present embodiment, a multi colour LED which allows to indicate several different signals by variation of the colour and the blinking frequency.

The analytic sample cuvette timer rack 10 also comprises a single separate sample cuvette reader station 52 which defines a cuvette reader receptacle 540 for receiving an analytic sample cuvette 20 therein. Every analytic sample cuvette 20, 20' is provided with a cuvette body 22 being provided with a readable analysis type indicator 26 indicating the analysis type ty of that analytic sample cuvette 20. Typically, the analysis type indicator 26 is a paper label attached to the outside surface of the cuvette body 22. The analysis type indicator 26 of the present embodiment comprises a one-dimensional barcode representing the analysis type of the analytic sample cuvette 20, 20'. The sample cuvette 20 is already provided by the cuvette manufacturer with a suitable reagent. Typical analysis types ty for water analysis are tests for determining the concentration of ammonium, phosphate or nitrate.

The sample cuvette reader station 52 is provided with an indicator reader 32 for reading the analysis type indicator 26 of the analytic sample cuvette 20 when the sample cuvette 20 is inserted into the cuvette reader receptacle 540. In the present embodiment, the indicator reader 32 is a one-dimensional line camera.

At the bottom of the cuvette reader receptacle 540, a rotatable receptacle base 36 is provided which is driven by an electric base motor 37. If the electric base motor 37 is activated, the sample cuvette 20' is rotated within the cuvette reader receptacle 540 around a vertical rotation axis.

The sample cuvette reader station 52 is also provided with a cuvette temperature detector 34 which detects the cuvette temperature tc of the sample cuvette 20 being inserted into the cuvette reader receptacle 540. In the present embodiment, the cuvette temperature detector 34 is a contactless infrared temperature sensor.

The analytic sample cuvette timer rack 10 is provided with an environmental temperature sensor 39 at the outside of the rack frame 50. The environmental temperature sensor detects the environmental air temperature te.

The analytic sample cuvette timer rack 10 is also provided with an electronic time management 40 being informationally connected to the indicator reader 32, the signal means 551-554, the sample cuvette presence sensors 561-564, the cuvette temperature detector 34, and the environmental temperature detector 39. The electronic time management 40 comprises an assigning means 46 which is connected to the sample cuvette presence sensors 561-564, comprises a signal driving unit 44 for driving the signal means 551-554, comprises a camera control 42, comprises an analysis type timing library 49 and comprises a timer coordination unit 48.

The analysis type timing library 49 has memorized reaction times Tr for all different analysis types ty and degree-wisely for cuvette temperatures tc of a temperature range of, for example 0°C to 140°C. High cuvette temperatures are typical for cuvettes after a digestion step and coming from a temperature chamber. A memorized reaction time Tr is the reaction time after which the reaction between the reagent and the analyte of the liquid sample 24 in the sample cuvette 20, 20' is finished so that the sample cuvette 20' is ready to be analyzed in the laboratory analyzer unit 90.

The laboratory analyzer unit 90 comprises an analyzer receptacle 94 to which an analyzer indicator reader 97, a rotatable base 95 driven by a base rotation motor 96, and a spectral photometer device 94 are assigned. The laboratory analyzer unit 90 is controlled by an electronic analyzer control 98 which is informationally connected to the electronic time management 40 of the analytic sample cuvette timer rack 10.

A measurement and determination of a reagent is started by pipetting a suitable volume of a liquid sample into the corresponding sample cuvette 20 so that the reagent starts to react with the analyte of the liquid sample. The pipetting can be provided outside of the analytic sample cuvette timer rack or can be provided when the analytic sample cuvette 20 is already inserted into the cuvette reader receptacle 540. The reading step can be initiated automatically or manually. The receptacle base 36 is started to rotate and the analysis type indicator 26 is read by the indicator reader 32 as well as the cuvette temperature tc is detected by the cuvette temperature detector 34.

Then the electronic time management 40 signalizes visually and/or acoustically that the analytic sample cuvette 20 can be placed to a free cuvette parking receptacle 541-544. The user person takes out the analytic sample cuvette 20 from the cuvette reader receptacle 540, and places the sample cuvette to a free sample cuvette parking receptacle 541-544, where the corresponding sample cuvette presence sensor 561-564 signalizes the presence of the cuvette 20' to the assigning means 46.

In the meantime, the electronic time management 40 has already read-out the memorized reaction time Tr for the detected analysis type ty and the cuvette temperature tc, and has corrected the memorized reaction time Tr on the basis of the environmental temperature te. After the reaction time Tr has elapsed, the timer coordination unit 48 activates the corresponding signal means 551-554 with a ready-signal indicating that the corresponding analytic sample cuvette 20' is now ready to be analyzed in the laboratory analyzer unit 90. The ready-signal can be, for example, a constant green light emitted by the corresponding signal means 551-554.

This procedure can be provided as many times and as long as there is a free sample cuvette parking receptacle 541-544 available.

## Claims

1. An analytic sample cuvette timer rack (10) comprising:
several identical vertical sample cuvette parking receptacles (541-544) for vertically parking analytic sample cuvettes (20') being provided with a readable analysis type indicator (26) indicating an analysis type (ty),
whereas every sample cuvette parking receptacle (541-544) is provided with a signal means (551-554),
a single separate sample cuvette reader station (52) with an indicator reader (32) for reading the analysis type indicator (26) of an analytic sample cuvette (20),
an assigning means (46) for assigning the analytic sample cuvette (20) to a sample cuvette parking receptacle (541-544), and
an electronic time management (40) being informationally connected to the indicator reader (32), to the signal means (551-554) and to the assigning means (46),
whereas the electronic time management (40) is provided with an analysis type timing library (49) has memorized reaction times (Tr) for at least two different analysis types (ty),
and
whereas the electronic time management (40) is provided with a timer coordination unit (48) which activates the signal means (551-554) of the assigned sample cuvette parking receptacle (541-544) when the reaction time (Tr) for the analysis type (ty) identified by the sample cuvette reader station (52) has elapsed.

2. The analytic sample cuvette timer rack (10) of claim 1, wherein a temperature detector (34) is assigned to the sample cuvette reader station (52) for detecting the cuvette temperature (tc) of the analytic sample cuvette (20), whereas the analysis type timing library (49) has memorized temperature-dependent reaction times (Tr),
whereas the timer coordination unit (48) activates the signal means (551-554) of the assigned sample cuvette parking receptacle (541-544) when the reaction time (Tr) for the detected cuvette temperature (tc) of the analysis type (ty) has elapsed.

3. The analytic sample cuvette timer rack (10) of one of the preceding claims, wherein every sample cuvette parking receptacle (541-544) is provided with a sample cuvette presence sensor (561-564) which is informationally connected to the assigning means (46), whereas the assigning of the sample cuvette parking receptacle (541-544) is caused by the respective sample cuvette presence sensor (561-564).

4. The analytic sample cuvette timer rack (10) of one of the preceding claims, wherein the sample cuvette reader station (52) is provided with a sample cuvette reader receptacle (540) which is provided with a motor-driven rotary receptacle base (36) for rotating the analytic sample cuvette (20).

5. The analytic sample cuvette timer rack (10) of one of the preceding claims, wherein an environmental temperature sensor (39) for detecting the environmental temperature (te) is provided, whereas the electronic time management (40) adapts the reaction time (Tr) based on the detected environmental temperature (te).

6. A method for running the analytic sample cuvette timer rack (10) of one of the preceding apparatus claims, with the method steps controlled by the electronic time management (40):
identifying the analysis type (ty) of the analysis type indicator (26) of a sample cuvette (20),
reading out the reaction time (Tr) for the identified analysis type (ty) from the analysis type timing library (49),
the assigning means (46) assigning a sample cuvette parking receptacle (541-544) for said analytic sample cuvette (20'), and
activating the electronic signal means (551-554) of the assigned sample cuvette parking receptacle (541-544) when the read-out reaction time (Tr) has elapsed.

7. The method of claim 6 for running the analytic sample cuvette timer rack (10) of claim 2, with the method step:
the timer coordination unit (48) reading out the reaction time (Tr) from the analysis type timing library (49) based on the identified analysis type (ty) and the corresponding cuvette temperature (tc).

8. The method of claim 6 or 7 for running the analytic sample cuvette timer rack (10) of claim 4, with the method step:
activating the rotary receptacle base (36) during the identifying step.
